# EUROPEAN PATENT SPECIFICATION

(11) **EP 3 275 713 B1**
(45) Date of publication and mention of the grant of the patent: **10.03.2021**
(21) Application number: 16768150.1
(22) Date of filing: 29.01.2016
(51) Int. Cl.: B60K 15/01, F02M 37/00, F16L 9/04, F16L 57/00, F16L 58/18, F02M 25/08, F16L 58/10, F16L 9/19

(54) **AUTOMOTIVE PIPE**
KRAFTFAHRZEUGROHR
TUYAU D'AUTOMOBILE

(30) Priority: 24.03.2015 JP 2015061358
(43) Date of publication of application: 31.01.2018
(73) Proprietor: Sanoh Industrial Co., Ltd., Tokyo 150-0013 (JP)
(72) Inventor: NAKAMURA Kazuhisa, Koga-shi Ibaraki 306-0041 (JP)
(74) Representative: Grünecker Patent- und Rechtsanwälte PartG mbB
(86) International application number: PCT/JP2016/052754
(87) International publication number: WO 2016/152247

(56) References cited:
- FR-A1- 2 538 076
- FR-A1- 2 911 945
- GB-A- 2 080 474
- JP-A- 2003 206 818
- JP-A- 2006 063 855
- JP-A- 2007 010 108
- JP-A- 2014 040 871
- US-A1- 2007 001 453

## Description

### Technical Field

The present invention relates to an automotive pipe mounted on an automobile.

### Background Art

Pipes, such as a fuel pipe and a fuel vapor pipe, are mounted on an automobile. The fuel pipe and the fuel vapor pipe are protected by a fuel pipe cover partially disposed thereover, and are fixed to, for example, a vehicle body with the fuel pipe cover interposed therebetween (refer to
JP 2013-244927, US 2007/001453 A1,
FR 2538076 A1 or FR 2911945 A1).

### Summary of Invention

### Technical Problem

However, in the case of the structure of protecting the automotive pipes mounted on the automobile with the protective cover, the protective cover needs to be appropriately shaped and disposed according to the shape of, for example, the vehicle body and other components mounted thereon, and workability of installing the protective cover is likely to deteriorate. Trying to unitize the protective cover and the pipes to improve the workability causes a need for an additional unitizing member, being likely to lead to an increase in the number of components.

The present invention is intended to solve the problem described above, and aims to provide an automotive pipe that is appropriately protected while the number of components is restrained from increasing.

### Solution to Problem

According to the present invention, an automotive pipe mounted on an automobile includes an inner pipe portion through which a fluid passes, an outer pipe portion surrounding a part of the inner pipe portion, and a restricting portion configured to restrict the outer pipe portion from moving in an axial direction thereof, and at least an outer circumferential surface of the inner pipe portion facing the outer pipe portion is made of a resin.

In the automotive pipe, at least the outer circumferential surface of the inner pipe portion facing the outer pipe portion is made of a resin, which is advantageous for resistance to corrosion and weight reduction. A part of the inner pipe portion is surrounded by the outer pipe portion. That is, a part of the inner pipe portion is protected over the entire circumference by the outer pipe portion, and thus, the inner pipe portion can be omnidirectionally protected. This leads to elimination of necessity of a process of, for example, taking time and effort to provide a protective cover at an appropriate location to protect the inner pipe portion fixed to a vehicle body of the automobile. Thus, workability can be improved while the number of components is restrained from increasing. Moreover, the outer pipe portion surrounds not the whole but a part of the inner pipe portion. That is, the outer pipe portion can be disposed so as to match a part of the inner pipe portion particularly required to be protected. Therefore, this structure is advantageous for size reduction and reduction of material.

The restricting portion is preferably a stopper portion that closes at least a part of a gap between the inner pipe portion and the outer pipe portion. By closing at least a part of the gap between the inner pipe portion and the outer pipe portion, the stopper portion interferes with the inner pipe portion, the outer pipe portion, or both the inner pipe portion and the outer pipe portion, and, as a result, restricts the outer pipe portion from moving. Providing the stopper portion can more appropriately restrict the outer pipe portion from moving to hold it in a fixed position. According to the invention, the inner pipe portion includes a core portion made of a metal and a resin layer coating an outer circumference of the core portion. The width of a gap between the inner pipe portion and the outer pipe portion is smaller than a thickness of the resin layer. Even if fine foreign objects enter the gap, the diameter of the foreign objects is smaller than the thickness of the resin layer because the gap is smaller than the thickness of the resin layer. That is, even if the foreign objects that have entered the gap hurt the resin layer, the foreign objects are difficult to reach the core portion made of a metal, which is advantageous for protection of the core portion.

The restricting portion is preferably a stopper portion that closes at least a part of a gap between the inner pipe portion and the outer pipe portion. The outer pipe portion preferably includes an upper end portion located on an upper side and a lower end portion located on a lower side when the outer pipe portion is mounted on the automobile. The stopper portion is preferably provided on the upper end portion side of the outer pipe portion and preferably closes the gap. The gap between the lower end portion of the outer pipe portion and the inner pipe portion is preferably open. The stopper portion is provided on the upper end side of the outer pipe portion, and moreover, the gap is closed. As a result, fine foreign objects are effectively prevented from dropping and entering the gap. Moreover, the gap between the lower end portion of the outer pipe portion and the inner pipe portion is open. Therefore, even if fine foreign objects enter the gap, the foreign objects are discharged from the lower end portion of the outer pipe portion.

### Advantageous Effects of Invention

According to the present invention, an inner pipe portion can be appropriately protected while the number of components is restrained from increasing.

### Brief Description of Drawings

FIG. 1 is a perspective view schematically illustrating an example of an automobile on which a pipe according to an embodiment of the present invention is mounted.
FIG. 2 is a perspective view illustrating a pipe according to a first embodiment of the present invention.
FIG 3 is an enlarged sectional view illustrating a stopper portion of the pipe according to the first embodiment.
FIG. 4 is an explanatory diagram schematically illustrating a manufacturing process of the pipe according to the first embodiment.
FIG 5 is an enlarged sectional view illustrating a stopper portion according to a second embodiment of the present invention.
FIG. 6 is an explanatory diagram schematically illustrating a manufacturing process of a pipe according to the second embodiment.
FIG. 7 is an enlarged sectional view illustrating a stopper portion of a pipe according to a third embodiment of the present invention.
FIG. 8 is an enlarged sectional view illustrating a stopper portion of a pipe according to a fourth embodiment of the present invention.
FIG. 9 is a perspective view illustrating a pipe according to a fifth embodiment of the present invention.
FIG. 10 depicts views illustrating a pipe according to a sixth embodiment of the present invention.
FIG. 11 is a perspective view illustrating a pipe according to a seventh embodiment of the present invention.
FIG. 12 is a perspective view of a pipe according to an eighth embodiment of the present invention.
FIG. 13 is a perspective view illustrating a pipe according to a ninth embodiment of the present invention.

### Description of Embodiments

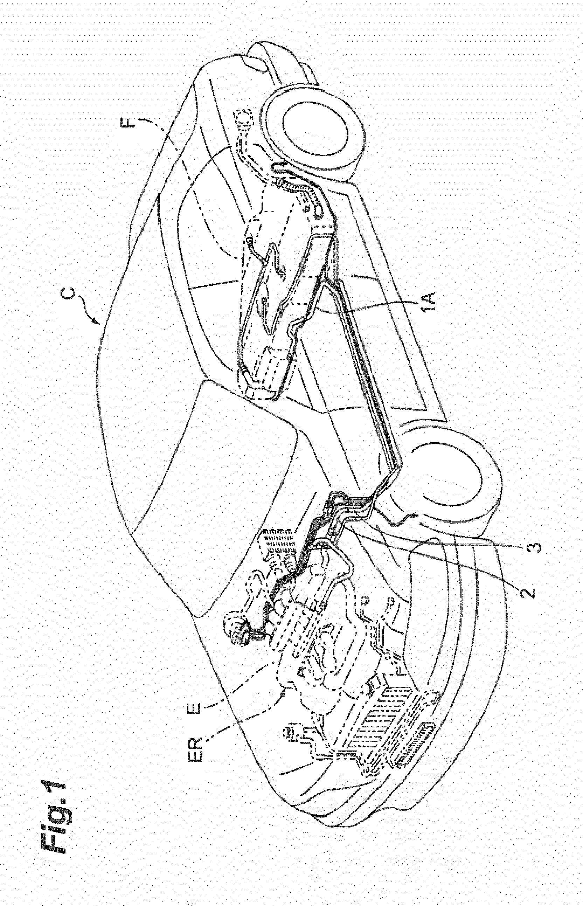

Hereinafter, embodiments according to the present invention will be described with reference to the drawings. First, with reference to FIG 1, an aspect will be described in which a pipe according to a first embodiment of the present invention is mounted on an automobile. Although the pipe according to the first embodiment will be described as a representative example with reference to FIG. 1, pipes according to second, third, fourth, fifth, sixth, seventh, eighth, and ninth embodiments (described later) can also be mounted in the same manner.

FIG. 1 is a perspective view of an automobile C that has a pipe structure including the pipe according to the first embodiment. Although FIG. 1 illustrates the automobile C with a commonly employed front-mounted engine, the automobile C may have a rear-mounted engine or a mid-mounted engine. Although a fuel tank F is disposed under a floor near a rear seat in the automobile C illustrated in FIG. 1, the fuel tank F may be disposed within the wheelbase on a further front part of a vehicle body if the automobile C has the rear-mounted engine or the mid-mounted engine.

As illustrated in FIG. 1, various pipes (hereinafter called "fuel pipes") 1A, such as a fuel pipe and a fuel vapor pipe, are mounted on the automobile C. A fuel pipe 1A is laid, for example, along a floor panel (floor surface) from the fuel tank F, rises from below a dash panel toward an upper side in an engine room ER, and is connected to, for example, an engine E. The fuel pipe 1A is fixed by a pipe holding structure, such as a clamp, to, for example a side frame of the vehicle body in the state in which a plurality of pipes are brought together. The fuel pipe 1A is an example of automotive pipes.

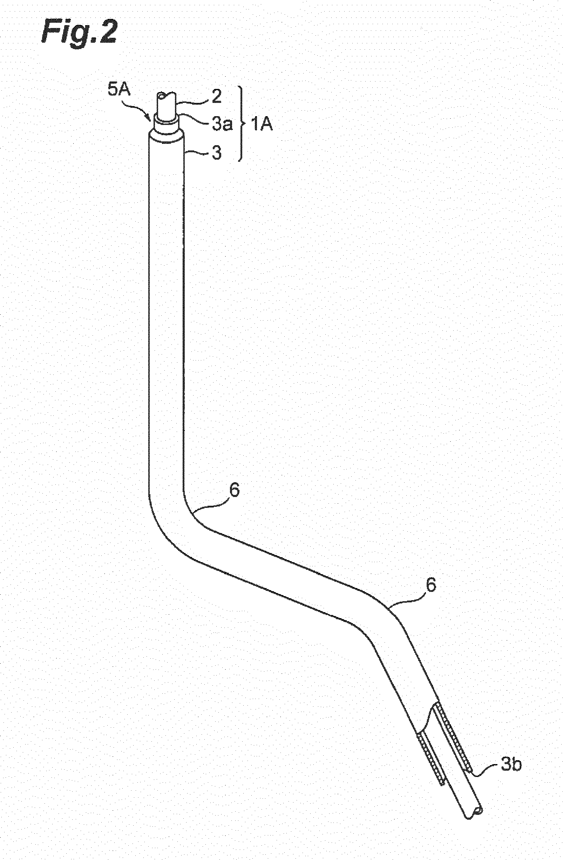

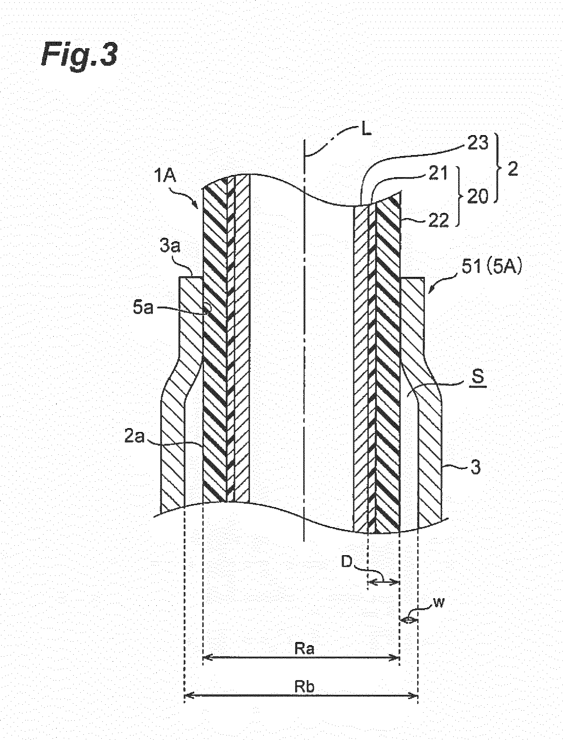

As illustrated in FIGS. 2 and 3, the fuel pipe 1A includes a main pipe portion 2 through which fuel as an example of a fluid passes and a protective pipe portion 3 surrounding a part of the main pipe portion 2. The fuel pipe 1A is provided by inserting the straight-shaped main pipe portion 2 into the protective pipe portion 3, and is further appropriately bent so as to have a predetermined shape in accordance with the position of mounting on the automobile C and the intended use. The main pipe portion 2 is an example of an inner pipe portion, and the protective pipe portion 3 is an example of an outer pipe portion.

The protective pipe portion 3 is disposed at a location close to the engine E and a transmission when the main pipe portion 2 is mounted on the automobile C (refer to FIG. 1). Specifically, the protective pipe portion 3 is disposed in the engine room ER, particularly, at a location therein rising from the floor panel (floor surface). During a collision, the main pipe portion 2 in the engine room ER is more likely to be affected thereby than in other places. Consequently, the main pipe portion 2 in the engine room ER highly needs to be protected from other members of the automobile C. In the engine room ER, countermeasures (countermeasures against chipping) for protecting the main pipe portion 2 from fine foreign objects (chippings) are also important. Hence, the protective pipe portion 3 is disposed in the engine room ER so as to correspond to a part of the main pipe portion 2 in the engine room ER.

The main pipe portion 2 includes a core portion 23 made of a metal such as iron, a fluorine resin layer 21 coating the outer circumference of the core portion 23, and a polypropylene (PP) coating layer 22 applied on the outer circumference of the fluorine resin layer 21. In the present embodiment, the fluorine resin layer 21 and the PP coating layer 22 form a resin layer 20 for protecting the core portion 23. Forming the resin layer 20 on the outer circumference of the core portion 23 is advantageous from the viewpoint of resistance to corrosion. When compared with a pipe made of only a metal material such as SUS, the main pipe portion 2 is more advantageous for weight reduction at least if the outside and inside diameters are the same.

In the main pipe portion 2, since the outer circumference of the core portion 23 is provided with the resin layer 20, an outer circumferential surface 2a facing the protective pipe portion 3 can be said to be made of a resin.

The resin layer 20 is not limited to the combination of the fluorine resin layer 21 and the PP coating layer 22, but, for example, can employ polyamide (PA) instead of the fluorine resin, or employ a heat-shrinkable tube instead of the PP coating layer 22.

Polypropylene (PP) or the heat-shrinkable tube can be used as the outer circumference in the same way as the above.

The protective pipe portion 3 externally covers a part in the longitudinal direction of the main pipe portion 2. In consideration of ease of insertion during processing, a small gap S is formed between the main pipe portion 2 and the protective pipe portion 3. Specifically, an inside diameter Rb of the protective pipe portion 3 is larger than an outside diameter Ra of the main pipe portion 2 so as to produce the constant gap S. A width W of the gap S is smaller than a thickness D of the resin layer 20 of the main pipe portion 2. As a result, even if foreign objects enter the gap S for some reason and hurt the resin layer 20, the foreign objects are difficult to reach the core portion 23 made of a metal, which is advantageous for protection of the core portion 23.

The width W of the gap S substantially refers to a value obtained by halving a value obtained by subtracting the outside diameter Ra of the main pipe portion 2 from the inside diameter Rb of the protective pipe portion 3. From the viewpoint of insertability of the protective pipe portion 3 onto the main pipe portion 2, the width W of the gap S is preferably 0.3 mm or greater, and more preferably 0.5 mm or greater. However, from the viewpoint of reducing the possibility of entering of foreign objects into the gap S, the width W of the gap S is preferably 1.2 mm or smaller, and more preferably 1.0 mm or smaller,

The protective pipe portion 3 only needs to be made of a material having a higher strength than that of the main pipe portion 2. The protective pipe portion 3 according to the present embodiment preferably has a higher strength than that of the resin layer 20, and more preferably has a strength equal to or higher than that of the core portion 23. For example, the protective pipe portion 3 is made of a metal, such as a stainless steel (SUS) or iron. If the protective pipe portion 3 is made of SUS, the protective pipe portion 3 has a high resistance to corrosion, and is difficult to rust. If, instead, the protective pipe portion 3 is made of iron and the like, a treatment such as plating is preferably applied thereto to increase anti-rust properties thereof.

The fuel pipe 1A according to the present embodiment includes restricting portions at two places for restricting the protective pipe portion 3 from moving in the axial direction thereof relative to the main pipe portion 2. One of the restricting portions is a stopper portion 5A, and the other of the restricting portions is a curved portion 6. The axial direction of the protective pipe portion 3 refers to a direction along an axial line L of the protective pipe portion 3.

The protective pipe portion 3 mounted on the main pipe portion 2 includes an upper end portion 3a disposed on the upper side in the vertical direction and an lower end portion 3b disposed on the lower side in the vertical direction in the state where the protective pipe portion 3 is mounted on the automobile C. The stopper portion 5A according to the present embodiment is provided by squeezing the upper end portion 3a of the protective pipe portion 3. The lower end portion 3b of the protective pipe portion 3 is left open without being provided with the stopper portion 5A.

The stopper portion 5A closes at least a part of the gap S between the main pipe portion 2 and the protective pipe portion 3. Specifically, the stopper portion 5A is a reduced diameter portion 51 of the protective pipe portion 3, and an inner circumferential surface 5a of the stopper portion 5A is in close contact with the outer circumferential surface 2a of the main pipe portion 2. In particular, the inner circumferential surface 5a of the stopper portion 5A according to the present embodiment is in close contact with the outer circumferential surface 2a of the main pipe portion 2 over the entire circumference around the axial line L of the protective pipe portion 3, and as a result, the stopper portion 5A substantially closes the gap S communicating in the axial direction.

The stopper portion 5A abuts on and interferes with the main pipe portion 2 so as to restrict the protective pipe portion 3 from moving in the axial direction. That is, the protective pipe portion 3 is fixed to and positioned in a fixed position of the main pipe portion 2 by the stopper portion 5A. The stopper portion 5A substantially closes the gap S communicating in the axial direction of the protective pipe portion 3, and consequently can effectively prevent foreign objects from entering the gap S from the upper end portion 3a.

From the viewpoint of restricting the protective pipe portion 3 from moving in the axial direction, the stopper portion 5A only needs to partially close the gap S, and need not close the gap S over the entire circumference around the axial line L. For example, the protective pipe portion 3 may be crushed in a manner sandwiching the main pipe portion 2 between a pair of opposed surfaces so as to close the gap S, or the outer circumferential surface 2a of the main pipe portion 2 may be pinched by a plurality of projections projecting inward from the protective pipe portion 3 so as to partially close the gap S.

The following describes the curved portion 6 (refer to FIG. 2) that restricts the protective pipe portion 3 from moving in the axial direction. The fuel pipe 1A has a plurality of such curved portions 6. The gap S is formed by the difference between the outside diameter Ra of the main pipe portion 2 and the inside diameter Rb of the protective pipe portion 3 (refer to FIG. 3). No substantial difference is present between the dimension of the gap S at the curved portions 6 and the dimension of the gap S at places other than the curved portions 6, and the gap S is not closed at the curved portions 6. If, however, the protective pipe portion 3 moves in the axial direction, the protective pipe portion 3 and the main pipe portion 2 interfere with each other not only at the stopper portion 5A, but also at the curved portions 6, so that the protective pipe portion 3 is restricted from moving in the axial direction.

Only one curved portion 6 may be provided instead of a plurality of curved portions 6. However, in the case of only one curved portion 6 is provided, the protective pipe portion 3 can move in the axial direction if the entire protective pipe portion 3 is curved with a uniform curvature. Therefore, in the case of only one curved portion 6, not the whole but only a part of the entire protective pipe portion 3 is preferably curved while leaving the other portions to be linear.

The lower end portion 3b of the protective pipe portion 3 is open. Forming the stopper portions 5A at both the upper and lower end portions 3a and 3b of the protective pipe portion 3 requires an increase in manufacturing processes. Therefore, providing the stopper portion 5A only at the upper end portion 3a is more advantageous for improving the workability. The open lower end portion 3b is preferable in that, even if foreign objects enter the gap S for some reason, the foreign objects are dropped and discharged from the lower end portion 3b without staying in the gap S.

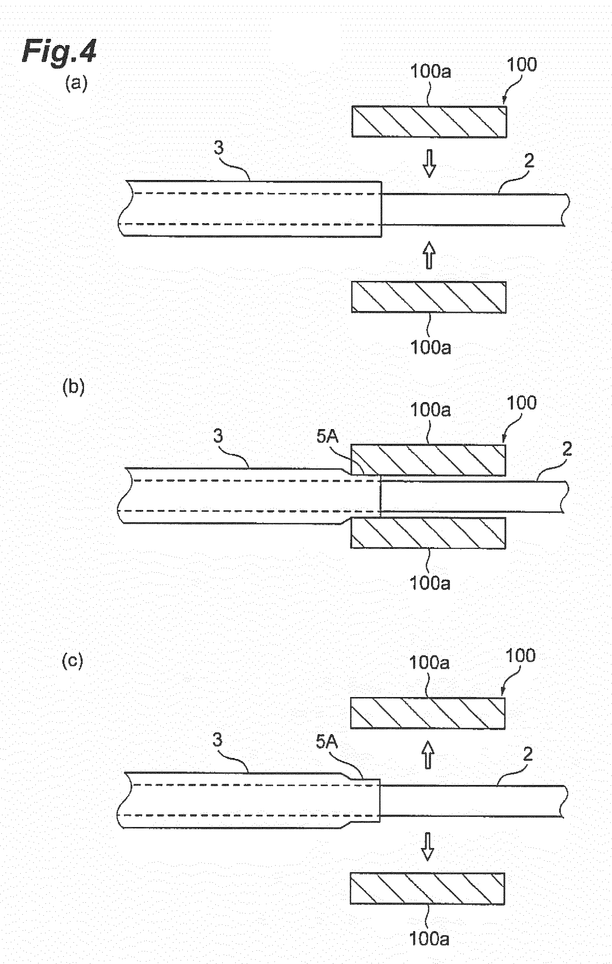

The following describes a method for manufacturing the fuel pipe 1A according to the present embodiment with reference to FIG. 4. The shape of the fuel pipe 1A is appropriately determined according to the size, layout, and the like of the automobile C on which the fuel pipe 1A is mounted, and consequently has already been determined at the design stage. In the same way, the disposing location of the protective pipe portion 3 relative to the main pipe portion 2 has also already been determined at the design stage. To manufacture the fuel pipe 1A, first, as a preparation step, the main pipe portion 2 in a linear state is passed through the protective pipe portion 3 in a linear state, and the protective pipe portion 3 is moved to the appropriate disposing location (refer to FIG. 4(a)). The linear main pipe portion 2 used in the preparation step is, for example, approximately 3000 mm long, and the linear protective pipe portion 3 used therein is, for example, approximately 300 mm long.

Then, an end on the upper end portion 3a side of the protective pipe portion 3 is set at a chucking device 100, and the upper end portion 3a of the protective pipe portion 3 is chucked by a pair of dies 100a to form the stopper portion 5A (refer to FIG. 4(b)). Moreover, in the state where the upper end portion 3a of the protective pipe portion 3 is chucked, the protective pipe portion 3 and the main pipe portion 2 are appropriately bent to have the predetermined shape. The predetermined shape refers to a shape according to the layout of the automobile C on which the fuel pipe 1A is mounted. After the bending processing of the fuel pipe 1A ends, the chucking of the stopper portion 5A is released, and the manufacturing of the fuel pipe 1A is completed (refer to FIG. 4(c)).

At least the outer circumferential surface 2a of the main pipe portion 2 of the fuel pipe 1A facing the protective pipe portion 3 is made of a resin, and is advantageous for the resistance to corrosion and the weight reduction. A part of the main pipe portion 2 is surrounded by the protective pipe portion 3. That is, this part of the main pipe portion 2 is protected over the entire circumference by the protective pipe portion 3, and thus, the main pipe portion 2 can be omnidirectionally protected. This leads to elimination of necessity of a process of, for example, taking time and effort to provide a protective cover at an appropriate location to protect the main pipe portion 2 fixed to the vehicle body of the automobile C. Thus, the workability can be improved while the number of components is restrained from increasing. Moreover, the protective pipe portion 3 surrounds not the whole but a part of the main pipe portion 2. That is, the protective pipe portion 3 can be disposed so as to match a part of the main pipe portion 2 particularly required to be protected. Therefore, this structure is advantageous for size reduction and reduction of material.

The protective pipe portion 3 according to the present embodiment is disposed in the engine room ER, and consequently can appropriately protect the main pipe portion 2 from the other members of the automobile C during the collision. The protective pipe portion 3 is also advantageous for protecting the main pipe portion 2 from fine foreign objects.

The fuel pipe 1A according to the present embodiment has the stopper portion 5A and the curved portions 6 as the restricting portions. The stopper portion 5A interferes with the main pipe portion 2 so as to appropriately restrict the protective pipe portion 3 from moving in the axial direction to hold it in the fixed position. The fuel pipe 1A has the curved portions 6, and the main pipe portion 2 and the protective pipe portion 3 interfere with each other at the curved portions 6 so as to appropriately restrict the protective pipe portion 3 from moving in the axial direction to hold it in the fixed position.

The stopper portion 5A is provided at the upper end portion 3a of the protective pipe portion 3 that is located on the upper side when mounted on the automobile C, and the stopper portion 5A closes the gap S. As a result, fine foreign objects are effectively prevented from falling into the gap S. Moreover, the gap S between the lower end portion 3b of the protective pipe portion 3 and the main pipe portion 2 is open. Therefore, even if fine foreign objects enter the gap S, the foreign objects are discharged from the lower end portion 3b of the protective pipe portion 3. This can lead to reduction of problems, such as a problem in which foreign objects remain in the gap S and hurt the outer circumferential surface 2a of the main pipe portion 2.

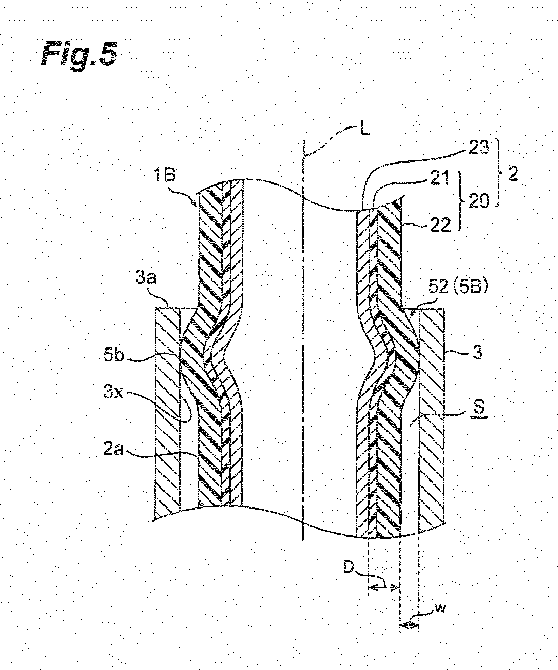

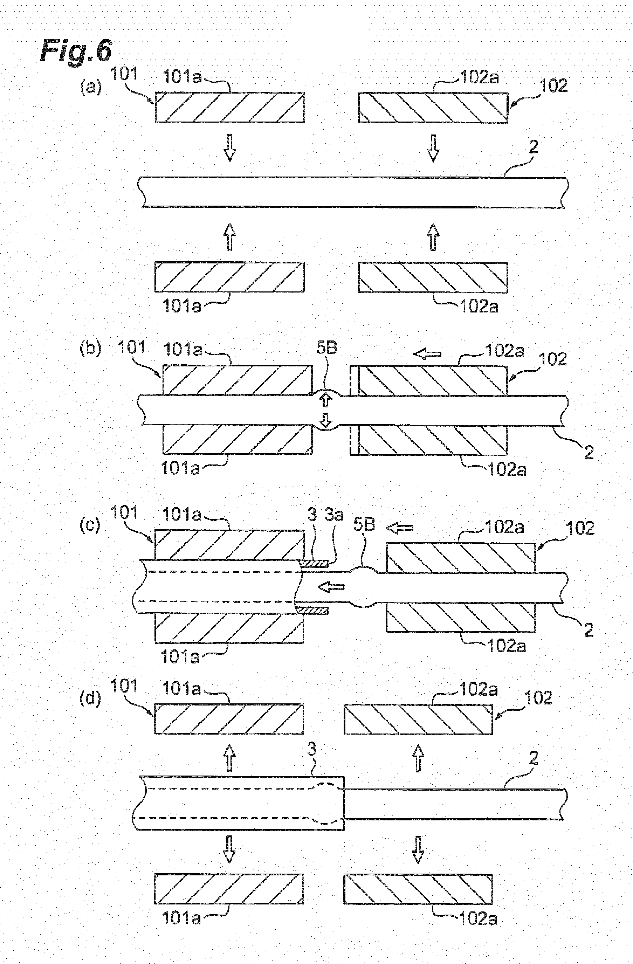

The following describes a fuel pipe 1B according to the second embodiment with reference to FIGS. 5 and 6. The fuel pipe 1B according to the second embodiment includes the same components and structure as those of the fuel pipe 1A according to the first embodiment. The following description focuses on differences therefrom. Common components will be assigned with the same reference numerals as those of the fuel pipe 1A according to the first embodiment, and detailed description thereof will be omitted.

The fuel pipe 1B according to the second embodiment includes the main pipe portion 2 through which the fuel passes and the protective pipe portion 3 surrounding a part of the main pipe portion 2. A stopper portion 5B for restricting the protective pipe portion 3 from moving in the axial direction is formed on the upper end portion 3a side of the protective pipe portion 3. The stopper portion 5B according to the present embodiment is formed at the main pipe portion 2, and closes at least a part of the gap S between the main pipe portion 2 and the protective pipe portion 3. Specifically, a part of the main pipe portion 2 bulges outward, and this bulging portion 52 is pressed into the protective pipe portion 3. The stopper portion 5B is the bulging portion (enlarged diameter portion) 52 of the main pipe portion 2. An outer circumferential surface 5b of the stopper portion 5B is in close contact with an inner circumferential surface 3x of the protective pipe portion 3.

The stopper portion 5B abuts on and interferes with the protective pipe portion 3 so as to restrict the protective pipe portion 3 from moving in the axial direction to hold it in the fixed position. The outer circumferential surface 5b of the stopper portion 5B is in close contact with the protective pipe portion 3 over the entire circumference around the axial line L of the protective pipe portion 3, and substantially closes the gap S communicating in the axial direction to effectively prevent foreign objects from entering the gap S.

The following describes a method for manufacturing the fuel pipe 1B according to the second embodiment (refer to FIG. 6). The method for manufacturing the fuel pipe 1B is the same as the above-described method for manufacturing the fuel pipe 1A according to the first embodiment in that the shape of the fuel pipe 1B and the disposing location of the protective pipe have already been determined at the design stage.

First, a location of the main pipe portion 2 corresponding to the upper end portion 3a of the protective pipe portion 3 is identified, and the main pipe portion 2 is set at a first chucking device 101 and a second chucking device 102 so as to position the location between the first and second chucking devices 101 and 102. In this state, a pair of dies 101a of the first chucking device 101 chuck the main pipe portion 2, and the second chucking device 102 chucks the main pipe portion 2 with a pair of dies 102a in the same way (refer to FIG 6(a)).

Then, the dies 102a of the second chucking device 102 are moved toward the first chucking device 101 while the first chucking device 101 is held in a fixed position. Since the first and second chucking devices 101 and 102 remain in the state of chucking the main pipe portion 2, the main pipe portion 2 receives a compressive force from the dies 102a of the second chucking device 102, and bulges outward (refer to FIG 6(b)). This bulging portion 52 serves as the stopper portion 5B.

Then, the linear main pipe portion 2 is passed through the linear protective pipe portion 3, and the protective pipe portion 3 is moved so as to position the upper end portion 3a close to the stopper portion 5B. At this time, the pair of dies 101a of the first chucking device 101 pinch to hold the protective pipe portion 3, and the pair of dies 102a of the second chucking device 102 pinch to hold the main pipe portion 2. Then, while the main pipe portion 2 is chucked, the pair of dies 102a of the second chucking device 102 are moved toward the first chucking device 101, and the stopper portion 5B is pressed into the upper end portion 3a of the protective pipe portion 3 (refer to FIG. 6(c)).

After the press fitting of the stopper portion 5B is completed, the main pipe portion 2 and the protective pipe portion 3 are bent so as to have the predetermined shape while the press-fit state is maintained. After the bending processing is completed, the chucking of the first and second chucking devices 101 and 102 is released (refer to FIG 6(d)).

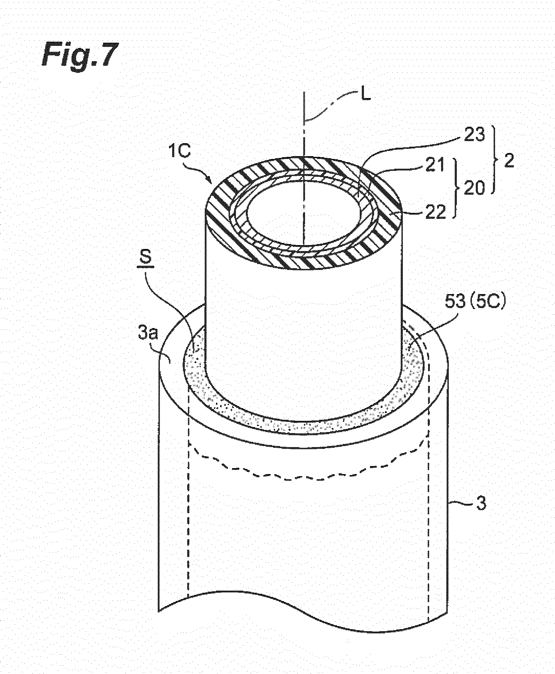

The following describes a fuel pipe 1C according to the third embodiment with reference to FIG 7. The fuel pipe 1C according to the third embodiment includes the same components and structure as those of the fuel pipe 1A or 1B according to the first or second embodiment. The following description focuses on differences therefrom. Common components will be assigned with the same reference numerals as those of the fuel pipe 1A or 1B according to the first or second embodiment, and detailed description thereof will be omitted.

The fuel pipe 1C according to the third embodiment includes the main pipe portion 2 through which the fuel passes and the protective pipe portion 3 surrounding a part of the main pipe portion 2. A stopper portion 5C for restricting the protective pipe portion 3 from moving in the axial direction is formed on the upper end portion 3a side of the protective pipe portion 3. In the present embodiment, the gap S is filled with an adhesive to form a sealing layer 53, and this sealing layer 53 serves as the stopper portion 5C. The stopper portion 5C closes the gap S between the main pipe portion 2 and the protective pipe portion 3, and is fixed to both the main pipe portion 2 and the protective pipe portion 3 so as to restrict the protective pipe portion 3 from moving in the axial direction to hold it in the fixed position.

The stopper portion 5C is bonded to both the main pipe portion 2 and the protective pipe portion 3 over the entire circumference around the axial line L of the protective pipe portion 3. The stopper portion 5C substantially closes the gap S communicating in the axial direction, and can thereby effectively prevent foreign objects from entering the gap S.

The adhesive forming the stopper portion 5C can be appropriately determined taking into consideration compatibility in adhesion properties with the main pipe portion 2 and the protective pipe portion 3. Depending on the material of the resin layer 20, the sealing layer 53 can be formed by welding the resin layer 20, instead of using the adhesive.

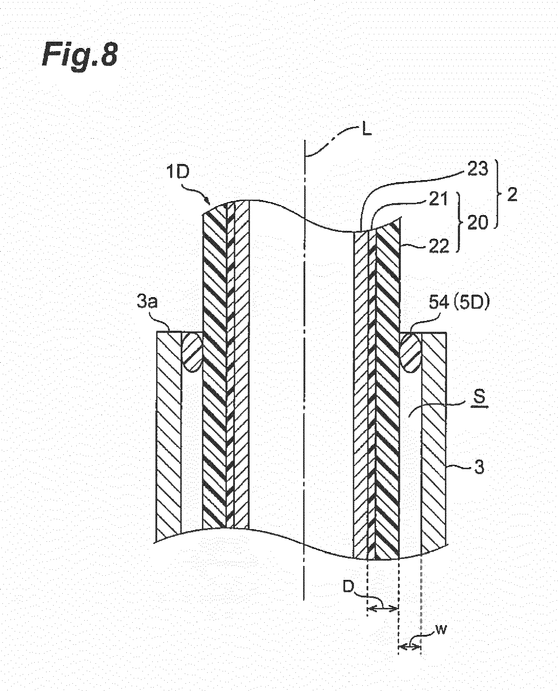

The following describes a fuel pipe ID according to the fourth embodiment with reference to FIG 8. The fuel pipe ID according to the fourth embodiment includes the same components and structure as those of the fuel pipe 1A, 1B, or 1C according to the first, second, or third embodiment. The following description focuses on differences therefrom. Common components will be assigned with the same reference numerals as those of the fuel pipe 1A, 1B, or 1C according to the first, second, or third embodiment, and detailed description thereof will be omitted.

The fuel pipe ID according to the fourth embodiment includes the main pipe portion 2 through which the fuel passes and the protective pipe portion 3 surrounding a part of the main pipe portion 2. An O-ring (sealing member) 54 is pressed into the gap S on the upper end portion 3a side of the protective pipe portion 3. In the present embodiment, the O-ring 54 pressed into the gap S serves as a stopper portion 5D. The stopper portion 5D closes the gap S between the main pipe portion 2 and the protective pipe portion 3, and interferes with both the main pipe portion 2 and the protective pipe portion 3 so as to restrict the protective pipe portion 3 from moving in the axial direction to hold it in the fixed position.

The stopper portion 5D is bonded to both the main pipe portion 2 and the protective pipe portion 3 over the entire circumference around the axial line L of the protective pipe portion 3. The stopper portion 5D substantially closes the gap S communicating in the axial direction, and can thereby effectively prevent foreign objects from entering the gap S.

The fuel pipes 1A, 1B, and 1C according to the second, third, and fourth embodiments described above provide the same effects as the fuel pipes 1A, 1B, and 1C according to the first embodiment, although to varying degrees.

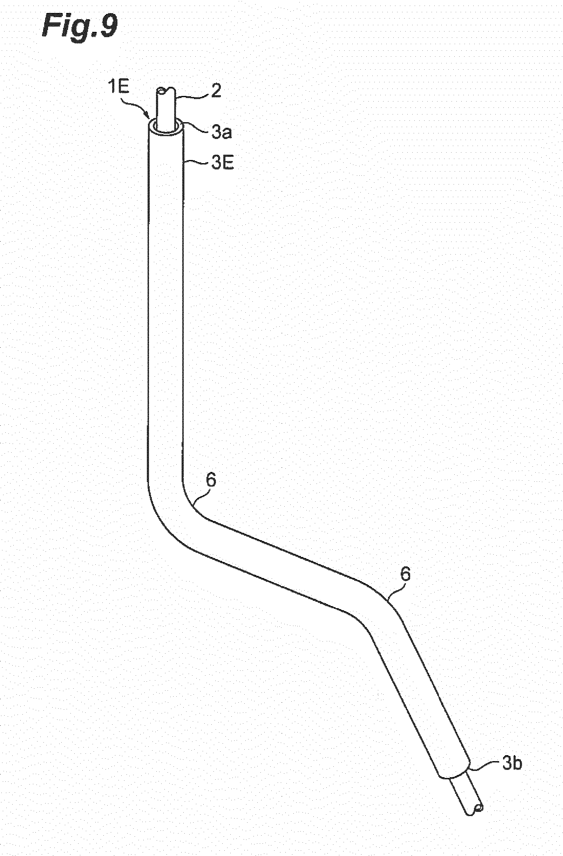

The following describes a fuel pipe 1E according to the fifth embodiment with reference to FIG. 9. The fuel pipe 1E according to the fifth embodiment includes the same components and structure as those of the fuel pipe 1A, 1B, 1C, or ID according to the first, second, third, or fourth embodiment. The following description focuses on differences therefrom. Common components will be assigned with the same reference numerals as those of the fuel pipe 1A, 1B, 1C, or ID according to the first, second, third, or fourth embodiment, and detailed description thereof will be omitted.

The fuel pipe 1E according to the fifth embodiment includes the main pipe portion 2 through which the fuel passes and a protective pipe portion 3E surrounding a part of the main pipe portion 2. The protective pipe portion 3E according to the present embodiment is substantially common to the protective pipe portion 3 according to the first embodiment, except that the stopper portion 5A is not formed.

The outer circumference of the main pipe portion 2 of the fuel pipe 1E according to the fifth embodiment is made of a resin, and is advantageous for the resistance to corrosion and the weight reduction. A part of the main pipe portion 2 is protected over the entire circumference by the protective pipe portion 3E, and thus, the main pipe portion 2 can be omnidirectionally protected from, for example, other components during the collision, and from fine foreign objects. Moreover, the protective pipe portion 3E surrounds not the whole but a part of the main pipe portion 2. That is, the protective pipe portion 3E can be disposed so as to match the part of the main pipe portion 2 particularly required to be protected. Therefore, this structure is advantageous for size reduction and reduction of material.

The fuel pipe 1E according to the fifth embodiment has the curved portions 6 as the restricting portions, and the main pipe portion 2 and the protective pipe portion 3E interfere with each other at the curved portions 6 so as to appropriately restrict the protective pipe portion 3E from moving in the axial direction to hold it in the fixed position.

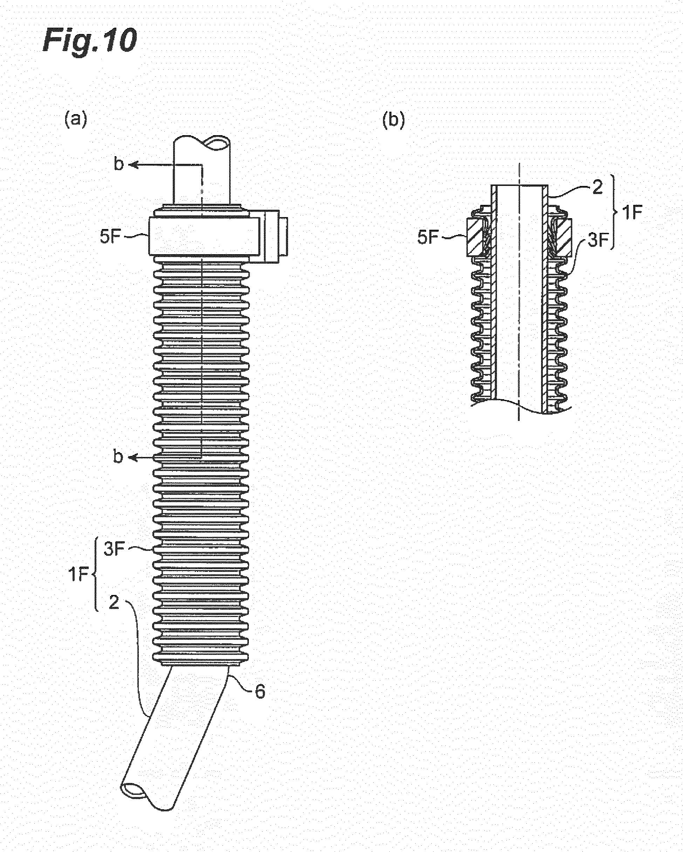

The following describes fuel pipes 1F, 1G, 1H, and 1J according to the sixth, seventh, eighth, and ninth embodiments, respectively, with reference to FIG. 10, 11, 12, and 13, respectively. The fuel pipe 1F, 1G, 1H, or 1J according to the sixth, seventh, eighth, or ninth embodiment, respectively, includes the same components and structure as those of the fuel pipe 1A, 1B, 1C, 1D, or 1E according to the first, second, third, fourth, or fifth embodiment, respectively. The following description focuses on differences therefrom. Common components will be assigned with the same reference numerals as those of the fuel pipe 1A, 1B, 1C, 1D, or 1E according to the first, second, third, fourth, or fifth embodiment, respectively, and detailed description thereof will be omitted.

FIG. 10 depicts views illustrating the fuel pipe 1F according to the sixth embodiment, FIG. 10(a) being a side view, and FIG. 10(b) being a sectional view taken along line b-b of FIG. 10(a). As illustrated in FIG 10, the fuel pipe 1F includes a protective pipe portion 3F surrounding a part of the main pipe portion 2. The protective pipe portion 3F according to the present embodiment is a corrugated pipe made of a resin, and each of the corrugations thereof arranged along the axial direction can be crushed by receiving external pressure to come in close contact with the main pipe portion 2.

A stopper portion 5F for restricting the protective pipe portion 3F from moving in the axial direction is formed on the upper end portion 3a side of the protective pipe portion 3F. The stopper portion 5F according to the present embodiment is a fastening member, such as a banding band, that tightens the protective pipe portion 3F made of a resin to reduce the diameter thereof, and, as a result, brings the protective pipe portion 3F into close contact with the main pipe portion 2. The protective pipe 3F is brought into close contact with the main pipe portion 2 by the stopper portion 5F, and restricts the protective pipe portion 3F from moving in the axial direction to hold it in the fixed position. The stopper portion 5F substantially closes a gap communicating in the axial direction between the main pipe portion 2 and the protective pipe portion 3F, and can thereby effectively prevent foreign objects from entering the gap.

Although the present embodiment has exemplified the protective pipe portion 3F made of a resin, the protective pipe portion 3F may be a corrugated pipe made of iron, aluminum, stainless steel, or ceramic, or may be a corrugated pipe having a multilayer structure formed by combining materials, such as a resin, iron, aluminum, stainless steel, and ceramic. If the protective pipe portion 3F has a configuration that is strong and is not deformed by being tightened with the fastening member, for example, the stopper portion 5A, 5B, 5C, or 5D, or the curved portions 6 described above may be provided, instead of the stopper portion 5F.

The curved portion 6 obtained by curving the main pipe portion 2 is formed on the lower end portion 3b side of the protective pipe portion 3F, and the curved portion 6 serves as a restricting portion for restricting the protective pipe portion 3F from moving in the axial direction.

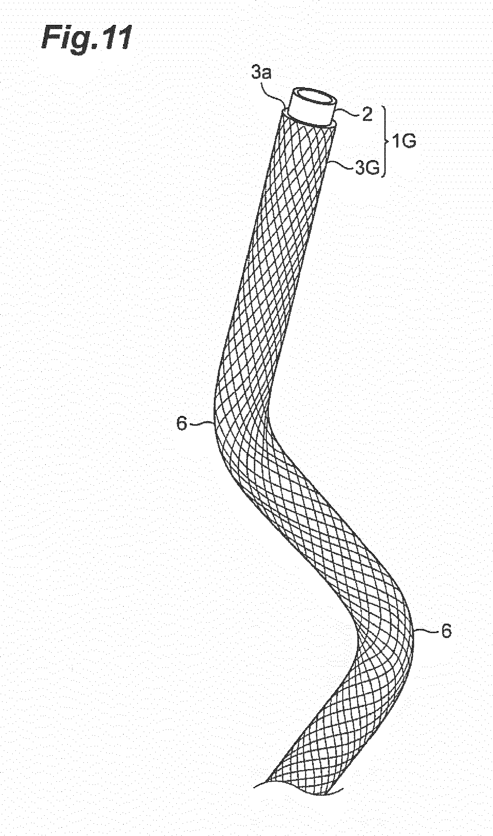

The following describes the fuel pipe 1G according to the seventh embodiment with reference to FIG. 11. The fuel pipe 1G according to the present embodiment includes a protective pipe portion 3G surrounding a part of the main pipe portion 2. The fuel pipe 1G has the curved portions 6 as the restricting portions, and the main pipe portion 2 and the protective pipe portion 3G interfere with each other at the curved portions 6 so as to appropriately restrict the protective pipe portion 3G from moving in the axial direction to hold it in the fixed position.

The protective pipe portion 3G is a mesh-like pipe. A resin, iron, aluminum, stainless steel, or ceramic can be appropriately used as the material thereof. Moreover, the protective pipe portion 3G may be a pipe having a multilayer structure formed by combining these materials. Although the curved portions 6 are formed along the protective pipe portion 3G so as to restrict the protective pipe portion 3G from moving in the axial direction, the stopper portion 5A, 5B, 5C, 5D, or 5F may be provided instead of the curved portions 6, or a combination of the curved portions 6 and the stopper portion 5A, 5B, 5C, 5D, or 5F may be used.

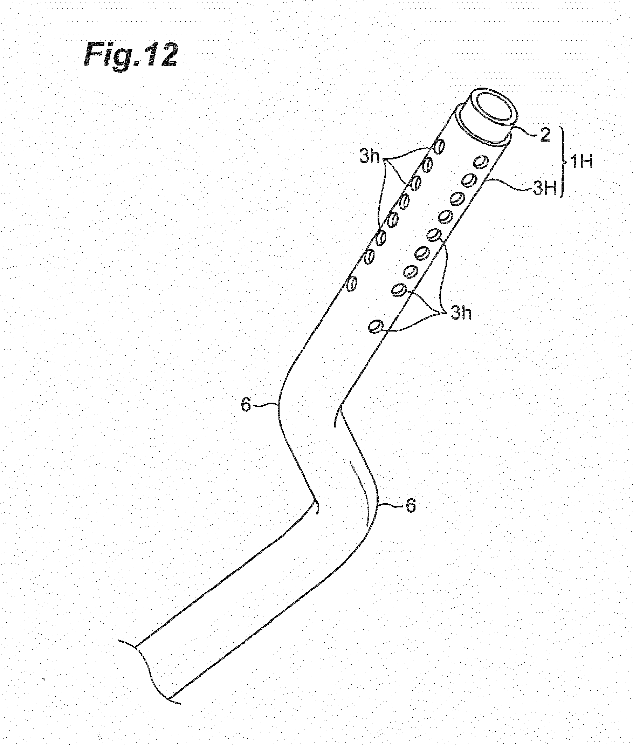

The following describes the fuel pipe 1H according to the eighth embodiment with reference to FIG. 12. The fuel pipe 1H according to the present embodiment includes a protective pipe portion 3H surrounding a part of the main pipe portion 2. The fuel pipe 1H has the curved portions 6 as the restricting portions, and the main pipe portion 2 and the protective pipe portion 3H interfere with each other at the curved portions 6 so as to appropriately restrict the protective pipe portion 3H from moving in the axial direction to hold it in the fixed position.

The protective pipe portion 3H is a pipe on which a plurality of holes 3h are formed. The holes 3h can be set to have any shape and size. A resin, iron, aluminum, stainless steel, or ceramic can be appropriately used as the material of the protective pipe portion 3H. Moreover, the protective pipe portion 3H may be a pipe having a multilayer structure formed by combining these materials. Although the curved portions 6 are formed along the protective pipe portion 3H so as to restrict the protective pipe portion 3H from moving in the axial direction, the stopper portion 5A, 5B, 5C, 5D, or 5F may be provided instead of the curved portions 6, or a combination of the curved portions 6 and the stopper portion 5A, 5B, 5C, 5D, or 5F may be used.

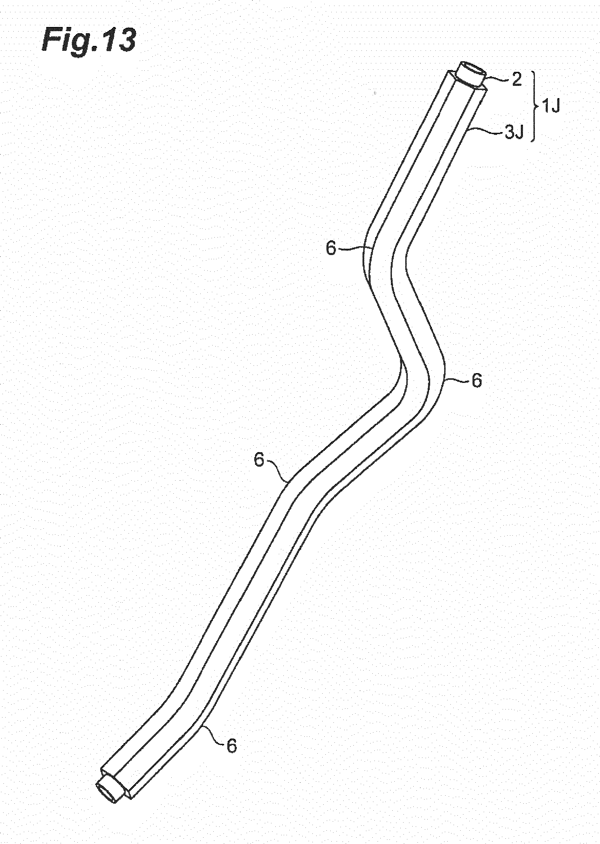

The following describes the fuel pipe 1J according to the ninth embodiment with reference to FIG. 13. The fuel pipe 1J according to the present embodiment includes a protective pipe portion 3J surrounding a part of the main pipe portion 2. The fuel pipe 1J has the curved portions 6 as the restricting portions, and the main pipe portion 2 and the protective pipe portion 3J interfere with each other at the curved portions 6 so as to appropriately restrict the protective pipe portion 3J from moving in the axial direction to hold it in the fixed position.

The protective pipe portion 3J is a pipe having a polygonal section when cut in a direction orthogonal to the axis of the protective pipe portion 3J. A resin, iron, aluminum, stainless steel, or ceramic can be appropriately used as the material of the protective pipe portion 3J. Moreover, the protective pipe portion 3J may be a pipe having a multilayer structure formed by combining these materials. Although the curved portions 6 are formed along the protective pipe portion 3J so as to restrict the protective pipe portion 3J from moving in the axial direction, the stopper portion 5A, 5B, 5C, 5D, or 5F may be provided instead of the curved portions 6, or a combination of the curved portions 6 and the stopper portion 5A, 5B, 5C, 5D, or 5F may be used.

Although the present invention has been described above by exemplifying the embodiments, the present invention is not limited to only the embodiments described above. For example, through appropriate combination of the embodiments described above, both the curved portions and the stopper portion may be used, only the curved portions may be formed, or only the stopper portion may be formed, as the restricting portion or portions.

The protective pipe portion (outer pipe portion) may be made of a resin, iron, aluminum, stainless steel, or ceramic, or may be a pipe having a multilayer structure formed by combining these materials.

### Reference Signs List

C Automobile; 1A, 1B, 1C, 1D, 1E, 1F, 1G, 1H, 1J Fuel pipe (automotive pipe); 2 Main pipe portion (inner pipe portion); 2a Outer circumferential surface; 3, 3E, 3F, 3G, 3H, 3J Protective pipe portion (outer pipe portion); 3a Upper end portion; 3b Lower end portion; 5A, 5B, 5C, 5D, 5F Stopper portion (restricting portion); 6 Curved portion (restricting portion); 23 Core portion; 20 Resin layer; D Thickness of resin layer; W Width of gap.

## Claims

1. An automotive pipe (1A) suitable for being mounted on an automobile (C) comprising:
an inner pipe portion (2) through which a fluid passes;
an outer pipe portion (3) surrounding a part of the inner pipe portion (2); and
a restricting portion (5A) configured to restrict the outer pipe portion (3) from moving in an axial direction thereof, wherein
at least an outer circumferential surface (2a) of the inner pipe portion (2) facing the outer pipe portion (3) is made of a resin,
**characterized in that**
the inner pipe portion (2) includes a core portion (23) made of a metal and a resin layer (20) coating an outer circumference of the core portion (23), and the width (W) of a gap between the inner pipe portion (2) and the outer pipe portion (3) is smaller than a thickness (D) of the resin layer (20).

2. The automotive pipe (1A) according to claim 1, wherein the restricting portion (5A) is a stopper portion that closes at least a part of a gap between the inner pipe portion (2) and the outer pipe portion (3).

3. The automotive pipe (1A) according to any one of claims 1 or 2, wherein
the restricting portion (5A) is a stopper portion that closes at least a part of a gap between the inner pipe portion (2) and the outer pipe portion (3),
the outer pipe portion (3) includes an upper end portion (3a) configured to be ocated on an upper side and
a lower end portion (3b) configured to be located on a lower side when the outer pipe portion (3) is mounted on the automobile (C),
the stopper portion is provided on the upper end portion (3a) side of the outer pipe portion (3) and closes the gap, and
the gap between the lower end portion (3b) of the outer pipe portion (3) and the inner pipe portion (2) is open.

## Patentansprüche

1. Kraftfahrzeug-Rohr (1A), das zum Montieren an einem Kraftfahrzeug (C) geeignet ist, umfassend:
einen inneren Rohrabschnitt (2), durch den ein Fluid hindurchtritt;
einen äußeren Rohrabschnitt (3), der einen Teil des inneren Rohrabschnitts (2) umgibt; und
einen Einschränkungsabschnitt (5A), der so ausgeführt ist, dass er Bewegung des äußeren Rohrabschnitts (3) in einer axialen Richtung desselben einschränkt, wobei
wenigstens eine Außenumfangsfläche (2a) des inneren Rohrabschnitts (2), die dem äußeren Rohrabschnitt (3) zugewandt ist, aus einem Kunststoff besteht,
**dadurch gekennzeichnet, dass** der innere Rohrabschnitt (2) einen Kernabschnitt (23), der aus einem Metall besteht, und eine Kunststoffschicht (20) enthält, die einen Außenumfang des Kernabschnitts (23) überzieht, und die Breite (W) eines Zwischenraums zwischen dem inneren Rohrabschnitt (2) und dem äußeren Rohrabschnitt (3) kleiner ist als eine Dicke (D) der Kunststoffschicht (20).

2. Kraftfahrzeug-Rohr (1A) nach Anspruch 1, wobei der Einschränkungsabschnitt (5A) ein Verschlussabschnitt ist, der wenigstens einen Teil eines Zwischenraums zwischen dem inneren Rohrabschnitt (2) und dem äußeren Rohrabschnitt (3) verschließt.

3. Kraftfahrzeug-Rohr (1A) nach einem der Ansprüche 1 oder 2, wobei
der Einschränkungsabschnitt (5A) ein Verschlussabschnitt ist, der wenigstens einen Teil eines Zwischenraums zwischen dem inneren Rohrabschnitt (2) und dem äußeren Rohrabschnitt (3) verschließt,
der äußere Rohrabschnitt (3) einen oberen Endabschnitt (3a), der so ausgeführt ist, dass er sich an einer oberen Seite befindet, und einen unteren Endabschnitt (3b) enthält, der so ausgeführt ist, dass er sich an einer unteren Seite befindet, wenn der äußere Rohrabschnitt (3) an dem Kraftfahrzeug (C) montiert ist,
der Verschlussabschnitt an der Seite des oberen Endabschnitts (3a) des äußeren Rohrabschnitts (3) vorhanden ist und den Zwischenraum verschließt, und
der Zwischenraum zwischen dem unteren Endabschnitt (3b) des äußeren Rohrabschnitts (3) und dem inneren Rohrabschnitt (2) offen ist.

## Revendications

1. Tuyau d'automobile (1A) convenant à un montage sur une automobile (C) comprenant :
un tuyau interne (2) au travers duquel passe un fluide,
un tuyau externe (3) entourant une partie du tuyau interne (2), et
un organe de limitation (5A) configuré pour limiter le mouvement du tuyau externe (3) dans sa direction axiale, dans lequel
au moins la surface circonférentielle externe (2a) du tuyau interne (2), qui fait face au tuyau externe (3) est constituée d'une résine,
**caractérisé en ce que**
le tuyau interne (2) inclut un cœur (23) constitué d'un métal et une couche de résine (20) recouvrant la circonférence externe du cœur (23), et la largeur (W) d'un intervalle compris entre le tuyau interne (2) et le tuyau externe (3) est plus petit que l'épaisseur (D) de la couche de résine (20).

2. Tuyau d'automobile (1A) selon la revendication 1, dans lequel l'organe de limitation (5A) est une butée qui ferme au moins une partie de l'intervalle entre le tuyau interne (2) et le tuyau externe (3).

3. Tuyau d'automobile (1A) selon l'une quelconque des revendications 1 ou 2, dans lequel
l'organe de limitation (5A) est une butée qui ferme au moins une partie de l'intervalle entre le tuyau interne (2) et le tuyau externe (3),
le tuyau externe (3) inclut une extrémité supérieure (3a) configurée pour être située sur le côté supérieur, ainsi qu'une extrémité inférieure (3b) configurée pour être située sur le côté inférieur lorsque le tuyau externe (3) est monté sur l'automobile (C),
la butée est disposée sur le côté de l'extrémité supérieure (3a) du tuyau externe (3) et referme l'intervalle, et
l'intervalle entre l'extrémité inférieure (3b) du tuyau externe (3) et le tuyau interne (2) est ouvert.
